# EUROPÄISCHE PATENTANMELDUNG

(11) **EP 3 095 575 A1**
(43) Veröffentlichungstag der Anmeldung: **23.11.2016**
(21) Anmeldenummer: 15167939.6
(22) Anmeldetag: 18.05.2015
(51) Int. Cl.: B29B 13/02, B29C 31/04, B67D 7/80, H05B 3/50

(54) **BEHEIZBARE FOLGERPLATTE ZUM AUFSCHMELZEN VON KLEBSTOFF**

(71) Anmelder: Robatech AG, 5630 Muri (CH)
(72) Erfinder: Meier, Martin, 5621 Zufikon (CH)
(74) Vertreter: Quermann, Helmut

(57) **Zusammenfassung**

Die Erfindung betrifft eine beheizbare Folgerplatte (3) zum Aufschmelzen von Klebstoff, insbesondere zur Verwendung bei einem Fassschmelzer (1)

Hierbei weist die Folgerplatte (3) einen Grundkörper (9) und mehrere mit diesem austauschbar verbundene, beheizbare Segmente (13) auf. Zwischen den Segmenten (13) sind Kanäle (27) gebildet, die strahlenförmig zu einem Zentrum (14) der Folgerplatte (3) angeordnet sind, zum Aufnehmen von mittels der Segmente (13) aufgeschmolzenem Klebstoff in den Kanälen (27) und Ableiten des aufgeschmolzenen Klebstoffs durch die Kanäle (27) in Richtung des Zentrums (14) zu einem zentralen Auslass (38) der Folgerplatte (3).

Diese Ausbildung der Folgerplatte ermöglicht es, die erforderliche Wärmeübertragung von der Folgerplatte zum Klebstoff hin auf den Klebstoff und die erforderliche Schmelzleistung optimal abzustimmen.

## Beschreibung

Die Erfindung betrifft eine beheizbare Folgerplatte zum Aufschmelzen von Klebstoff, insbesondere zur Verwendung bei einem Fassschmelzer.

Hotmelt-Klebstoffe sind bei Raumtemperatur fest und werden für die Verarbeitung durch Aufheizen in den flüssigen Zustand gebracht. Der flüssige Klebstoff wird bei der Verarbeitung mittels Klebstoffauftragsgeräten unter Druck gestellt und dann mit Dosiereinheiten entsprechend der Verwendung auf ein Substrat aufgebracht. Bevor der Klebstoff abkühlt und sich dadurch verfestigt, werden die zu verklebenden Substratteile zusammengefügt und in Position gehalten. Beim Abkühlen geht der Klebestoff vom flüssigen Zustand in den festen Zustand zurück und erzeugt damit eine Haftung der Substratteile.

Klebstoff wird als Granulat oder als fester Block in Fässern angeliefert. Bei den Fässern wird mit einem Fassschmelzgerät über eine beheizbare Folgerplatte der feste Klebstoff von oben aufgeschmolzen. Der verflüssigte Klebstoff gelangt durch eine Pumpe in einen Vorratsbehälter oder direkt zu den Dosiereinheiten.

Fassschmelzer mit beheizten Folgerplatten sind in der Industrie seit Jahren bekannt und werden erfolgreich eingesetzt. Dabei sind Folgerplatten mit unterschiedlichen Oberflächen in Richtung des aufzuschmelzenden Klebstoffs im Einsatz.

Aus der EP 0 901 981 A1 ist eine einteilige Folgerplatte mit Rippen, die in konzentrischen Ringen auf der Folgerplatte angeordnet und mit radial nach dem Zentrum der Folgerplatte verlaufenden Bohrungen durchsetzt sind, bekannt. Eine derartige verrippte Folgerplatte ermöglicht eine effiziente Aufschmelzung des Klebstoffs, ohne diesen thermisch übermäßig zu belasten. Durch die Bohrungen kann der aufgeschmolzene Klebstoff einfach in Richtung Zentrum entweichen und dort von einer Pumpe abgesogen und weitertransportiert werden.

Im Weiteren sind Folgerplatten mit Rippen bekannt, die von außen in Richtung Zentrum der Folgerplatte verlaufen. Solche Folgerplatten erreichen ebenfalls eine hohe Aufschmelzleistung des Klebstoffs. Nicht so gut wie bei den Folgerplatten mit den konzentrischen Rippen ist die Wegleitung des aufgeschmolzenen Klebstoffs. Im Gegensatz dazu lassen sich derartige Folgerplatten jedoch einfach herstellen.

Weiter sind Folgerplatten bekannt, die eine glatte Oberfläche aufweisen, die zum Zentrum hin leicht konkav ausgeführt ist. Durch die konkave Form wird der flüssige Klebstoff Richtung Zentrum weggeleitet und kann dort von einer Pumpe weitertransportiert werden. Glatte Folgerplatten erreichen in der Regel kleinere Klebstoffaufschmelzleistungen als verrippte Folgerplatten. Sie haben jedoch den Vorteil, dass fast kein nicht aufgeschmolzener Klebstoff im Fass zurückbleibt, wenn die Folgerplatte den Fassboden erreicht.

Es hat sich in der Praxis gezeigt, dass je nach Anwendung und je nach dem verwendeten Klebestoff nicht eine Folgerplatte zu definieren ist, mit der das beste Resultat erreicht werden kann. So kann es für bei niedriger Temperatur schmelzende Klebstoffe und bei geringem Klebstoffverbrauch vorteilhaft sein, glatte Folgerplatten oder Folgerplatten mit geringen Rippenhöhen zu verwenden. Bei hohem Klebstoffverbrauch werden Folgerplatten mit größeren Rippenhöhen benötigt, und wenn gleichzeitig der Klebestoff bei höherer Temperatur schmelzend ist, sind größere Rippenhöhen und größere Rippenabstände auf den Folgerplatten von Vorteil.

Es ist Aufgabe der vorliegenden Erfindung, eine beheizbare Folgerplatte zum Aufschmelzen von Klebestoff, insbesondere zur Verwendung bei einem Fassschmelzer, zu realisieren, mit der die erforderliche Wärmeübertragung, von der Folgerplatte zum Klebstoff hin auf den Klebstoff, und die erforderliche Schmelzleistung abgestimmt werden kann.

Gelöst wird die Aufgabe durch eine beheizbare Folgerplatte, die gemäß den Merkmalen des Patentanspruchs 1 ausgebildet ist.

Bei der erfindungsgemäßen beheizbaren Folgerplatte zum Aufschmelzen von Klebstoff, insbesondere zur Verwendung bei einem Fassschmelzer, weist die Folgerplatte einen Grundkörper und mehrere mit diesem austauschbar verbundene, beheizbare Segmente auf. Zwischen den Segmenten sind Kanäle gebildet, die strahlenförmig zu einem Zentrum der Folgerplatte angeordnet sind. Die Kanäle dienen dem Aufnehmen von mittels der Segmente aufgeschmolzenem Klebstoff und zum Ableiten des aufgeschmolzenen Klebstoffs in Richtung des Zentrums zu einem zentralen Auslass der Folgerplatte.

Gemäß der Erfindung ist somit eine mehrteilige Folgerplatte vorgesehen. Da die Segmente bezüglich des Grundkörpers separate Bauteile darstellen, können die Segmente entsprechend den zu erfüllenden Anforderungen an den Klebstoff und die erforderliche Schmelzleistung der Folgerplatte ausgetauscht werden, um den Schmelzvorgang mittels der besonders geeigneten Segmente zu vollführen. So besteht insbesondere die Möglichkeit, den Grundkörper mit Segmentteilen, die mit Rippen versehen sind, sei es mit kleineren oder größeren Rippenhöhen, oder aber mit Segmentteilen, die eine glatte Oberfläche aufweisen, zu bestücken. Die hierbei zwischen den Segmentteilen gebildeten Kanäle gewährleisten eine einfache und zuverlässige Abführung des aufgeschmolzenen Klebstoffs in Richtung des Zentrums der Folgerplatte zum zentralen Auslass der Folgerplatte hin. Von dort wird der aufgeschmolzene Klebstoff in aller Regel mittels einer Pumpe abgesogen und weitertransportiert. Die Ausbildung der Folgerplatte mit den Segmentteilen, die mit dem Grundkörper austauschbar verbunden sind, hat den weiteren Vorteil, dass die Folgerplatte nicht mit diese im Sinne von Bohrungen durchsetzenden Kanälen zum Ableiten des aufgeschmolzenen Klebstoffs zu versehen ist. Dies vereinfacht nicht nur das Abführen des aufgeschmolzenen Klebstoffs, sondern es vereinfacht auch eine erforderliche Reinigung der Folgerplatte, wenn diese Bohrungen nicht benötigt werden und damit von Klebstoff zu reinigen sind.

Grundsätzlich kann die Folgerplatte zum Aufschmelzen des Klebstoffs auf beliebige Art und Weise beheizt werden, sofern eine für den Schmelzprozess erforderliche Schmelztemperatur der Segmente gewährleistet ist. Demzufolge ist es grundsätzlich möglich, den Grundkörper mittels Heizpatronen aufzuheizen und über diesen erhitzten Grundkörper die Segmentteile aufzuheizen. Es wird aber als besonders vorteilhaft angesehen, wenn die Heizpatronen in die Segmente integriert sind. Es erfolgt somit das unmittelbare Aufheizen der Segmente. Besonders vorteilhaft ist es, wenn die Heizpatronen, die in die Segmente integriert sind, über eine trennbare Verbindung mit einer Energiezuführung verbindbar sind. Insbesondere ist eine steckbare Verbindung vorgesehen. Demzufolge ist es nur erforderlich, beim Montieren der Segmente am Grundkörper die Anschlüsse der in die Segmente integrierten Heizpatronen mit der Energiezuführung zu verbinden, insbesondere steckend zu verbinden. Bei dieser Steckverbindung wird somit unmittelbar beim Positionieren der Segmente am Grundkörper die Verbindung zur Energiezuführung bewerkstelligt. Beim Demontieren der Segmente vom Grundkörper erfolgt das Trennen der Verbindung mit der Energiezuführung.

Es ist insbesondere vorgesehen, dass die Heizleistung der Heizpatronen über eine Steuerung, die die Energiezufuhr steuert, regelbar ist. Insbesondere wird die Heizleistung der Heizpatronen durch die Steuerung, die die Energiezufuhr steuert, an die Eigenschaften des Klebstoffs und/oder an den erforderlichen Klebstoffverbrauch angepasst.

Die Folgerplatte ist vorzugsweise derart gestaltet, dass sie in einem zentralen Bereich einen Einsatz mit Durchlässen aufnimmt, derart, dass die Kanäle zwischen den Segmenten in Strömungsverbindung mit den Durchlässen sind und mit dem Einsatz eine Pumpvorrichtung zum Abfördern des geschmolzenen Klebstoffs aus dem Einsatz, durch die Durchlässe hindurch, verbindbar ist.

Gemäß einer besonders einfachen Gestaltung der Folgerplatte ist vorgesehen, dass sowohl der Grundkörper als auch die durch die Segmente gebildete Segmentanordnung einen identischen Kreisring bilden, mit relativ großem Außendurchmesser und relativ kleinem Innendurchmesser, wobei die Anordnung von Grundkörper und Segmentteilen im Bereich des genannten Innendurchmessers den Einsatz aufnimmt.

Um die Bauteilvielfalt zu minimieren ist vorgesehen, dass mit dem Grundkörper verbundene Segmente identisch ausgebildet sind. Es ist zum Bestücken des Grundkörpers mit einer Anordnung identischer Segmente nur eine definierte Anzahl von Segmenten, beispielsweise Segmenten mit größeren Rippenhöhen, vorzuhalten. Sollen diese Segmente gegen Segmente geringerer Rippenhöhe ausgetauscht werden, ist es nur erforderlich, eine entsprechende Anzahl von Segmenten mit geringerer Rippenhöhe vorzuhalten, die somit das Bestücken des Grundkörpers erlaubt.

Vorteilhaft ist es, wenn acht bis sechzehn Segmente mit dem Grundkörper verbunden sind, vorzugsweise zehn bis vierzehn Segmente mit dem Grundkörper verbunden sind, insbesondere zwölf Segmente mit dem Grundkörper verbunden sind.

Insbesondere erstreckt sich das jeweilige Segment über einen Kreisbogen.

Gemäß einer bevorzugten Weiterbildung der Erfindung ist vorgesehen, dass sich der Querschnitt des jeweiligen Kanals in Richtung des Zentrums der Folgerplatte vergrößert. Da sich im äußeren, insbesondere radial äußeren Bereich der Segmentanordnung nur relativ wenig aufgeschmolzener Klebstoff ansammelt und dort in die Kanäle zwischen den Segmenten gelangt, aber weiter zum Zentrum hin, insbesondere nach radial innen hin, weiterer aufgeschmolzener Klebstoff in die Kanäle gelangt, kann somit durch Vergrößerung des Querschnitts des jeweiligen Kanals in Richtung des Zentrums dieser Zunahme des Klebstoffvolumens in Richtung des Zentrums Rechnung getragen werden. Im Idealfall strömt der aufgeschmolzene Klebstoff mit konstanter Fließgeschwindigkeit durch den jeweiligen Kanal in Richtung des Zentrums.

Gemäß einem bevorzugten Ausführungsbeispiel der Erfindung ist vorgesehen, dass die Segmente auf der dem Grundkörper abgewandten Seite mit Rippen versehen sind. Besonders vorteilhaft ist es, wenn die Rippen um das Zentrum herum angeordnet sind, zum Ableiten von mittels der Segmente aufgeschmolzenem Klebstoff von den Räumen zwischen den Rippen zu den Kanälen. Aufgeschmolzener Klebstoff wird somit im Wesentlichen tangential zu den Kanälen hin gefördert und dann im Wesentlichen radial durch die Kanäle zum Zentrum der Folgerplatte hin gefördert. Aufgeschmolzener Klebstoff wird somit nicht unmittelbar in Richtung des Zentrums der Folgerplatte geleitet, sondern zunächst entsprechend der Orientierung des Raums zwischen benachbarten Rippen zu den diesem Raum zwischen den Rippen zugeordneten Kanälen beidseitig des jeweiligen Segments.

Es wird als besonders vorteilhaft angesehen, wenn der jeweilige Raum zwischen Rippen, bezogen auf eine Längserstreckung des Raums, gerade oder geknickt, insbesondere einmal geknickt ausgebildet ist. Diese Gestaltung lässt sich einerseits besonders einfach herstellen, andererseits erlaubt sie besonders einfach die Bildung unterschiedlicher Rippengestaltungen.

Vorzugsweise sind die Rippen gegen das Zentrum geneigt angeordnet, insbesondere V-förmig ausgebildet gegen das Zentrum geneigt angeordnet.

Vorteilhaft ist es ferner, wenn die Rippen einen sich zum Rippengrund erweiternden Querschnitt aufweisen, insbesondere die Rippen V-förmigen Querschnitt aufweisen. Von Vorteil ist es ferner, wenn die Grundfläche zwischen den Rippen des jeweiligen Segments in einer Segmentmittelachse am weitesten von einer Auflagefläche dieses Segments auf den Grundkörper entfernt ist und diese Grundfläche im Auslaufbereich dieser Rippen am nahesten zur Auflagefläche des Segments auf dem Grundkörper ausgeführt ist. Diese Gestaltung ist vor dem Hintergrund zu sehen, dass, ausgehend von der genannten Segmentmittelachse, zunehmend mehr aufgeschmolzener Klebstoff zwischen den Rippen des jeweiligen Segments zu dem zugeordneten Kanal gefördert wird. Durch die Ausbildung des Bereichs zwischen den Rippen soll somit ein konstanter Fluss aufgeschmolzenen Klebstoffs durch den Raum zwischen den Rippen gewährleistet werden.

Benachbarte Segmente sind insbesondere derart angeordnet, dass sich Rippen unterschiedlicher Segmente kontaktieren oder diese Rippen in Abstand zueinander angeordnet sind. Sind diese Rippen benachbarter Segmente in Abstand zueinander angeordnet, ist zwischen den Segmenten im Bereich dieser Rippen ein Zwischenraum gebildet, durch den aufgeschmolzener Klebstoff in den diesem Bereich der beiden Segmente zugeordneten Kanal fließen kann. Sind die Rippen unterschiedlicher Segmente hingegen so angeordnet, dass sie sich kontaktieren, sind Durchlässe vorzusehen, die die Räume zwischen den Rippen mit dem zugeordneten Kanal zwischen den beiden benachbarten Segmenten verbinden. Insbesondere ist vorgesehen, dass der jeweilige Raum zwischen zwei Rippen, in Abstand zu den einander abgewandten Enden dieses Raums, durch Durchlässe in einem Boden des Segments in die dem Segment zugeordneten Kanäle mündet.

Bei der erfindungsgemäßen beheizbaren Folgerplatte einschließlich deren Weiterbildungen weist die Folgerplatte somit eine Vielzahl beheizbarer Segmente auf. Befindet sich die jeweilige Heizpatrone unmittelbar im Segmentteil, wirkt die Wärmequelle in unmittelbarer Nähe zum Klebstoff. Jedes Segment kann ausgetauscht werden. Bei einem Defekt eines Segments muss somit nicht die ganze Folgerplatte ausgetauscht werden. Die Form der Segmente ist wählbar und kann dem Klebstoff angepasst werden. Dadurch, dass jedes Segment vorzugsweise mit einer Heizpatrone ausgestaltet ist, können die Segmente in der Leistung dem jeweiligen Klebstoff angepasst werden, sodass nur so viel Leistung wie nötig verbraucht wird. Durch die separate Heizung der Segmente ist eine optimale Wärmeverteilung garantiert. Der einem Pumpenblock zugeordnete zentrale Einsatz ist vorzugsweise ebenfalls beheizt. Es können glatte Segmente (ohne Rippen), Segmente mit geringer Rippenhöhe, Segmente mit mittlerer Rippenhöhe, Segmente mit großer Rippenhöhe und großem Rippenabstand verwendet werden.

Weitere Merkmale der Erfindung sind in den Unteransprüchen, der Beschreibung der nachfolgenden Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer bevorzugter Ausführungsbeispiele dargestellt, ohne auf diese beschränkt zu sein.

Es zeigt:
- Fig. 1: für ein erstes Ausführungsbeispiel eine Seitenansicht eines Fassschmelzers, vor dem Einsetzen dessen beheizbarer Folgerplatte in ein Fass,
- Fig. 2: in vergrößerter Darstellung das für die Erfindung wesentliche Detail des Fassschmelzers, insbesondere die erfindungsgemäße beheizbare Folgerplatte,
- Fig. 3: eine Unteransicht der Folgerplatte, wobei diese allerdings nur im Bereich einer Hälfte mit Segmentteilen bestückt ist,
- Fig. 4: einen Schnitt gemäß der Linie A-A durch die Anordnung gemäß Fig. 3,
- Fig. 5: einen Schnitt gemäß der Linie B-B durch die Anordnung gemäß Fig. 3,
- Fig. 6: eine Unteransicht des bei dem Ausführungsbeispiel nach den Fig. 1 bis 5 Verwendung findenden Segments,
- Fig. 7 und 8: weitere Ausführungsbeispiele mit Unteransichten von Segmenten, die gegenüber dem Segment gemäß Fig. 6 modifiziert sind.

### Figurenbeschreibung

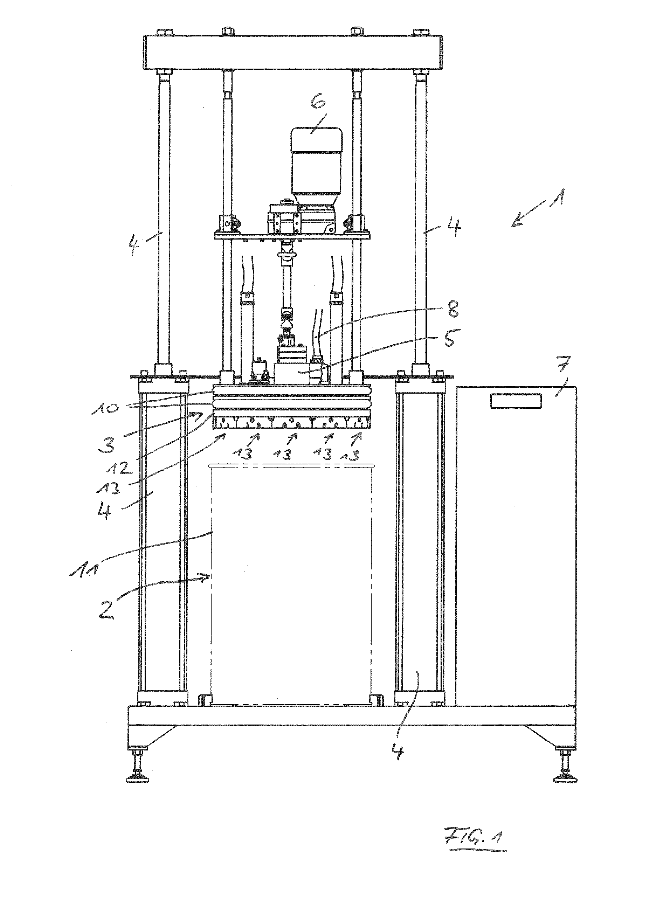

In der Fig. 1 ist ein Fassschmelzer 1 dargestellt. Ein mit sich in festem Zustand befindlichen Klebstoff gefülltes Fass 2 wird unter eine Folgerplatte 3 des Fassschmelzers 1 gestellt. Mittels eines Pneumatikzylinders 4 wird die Folgerplatte 3 gegen den Klebstoff im Fass 2 gedrückt. Wird flüssiger Klebstoff benötigt, so wird die Folgerplatte 3 durch Heizpatronen aufgeheizt, während die Folgerplatte 3 gleichzeitig mittels der Pneumatikzylinder 4 gegen den Klebstoff gepresst wird. Der Klebstoff beginnt zu schmelzen und wird durch Kanäle in der Folgerplatte 3 einer Pumpe 5 zugeführt. Ein Motor 6, der mit einer Steuerung, dargestellt durch den Steuerschrank 7, verbunden ist, treibt die Pumpe 5 an und fördert den flüssigen Klebstoff durch einen Schlauch 8 zum Verbraucher.

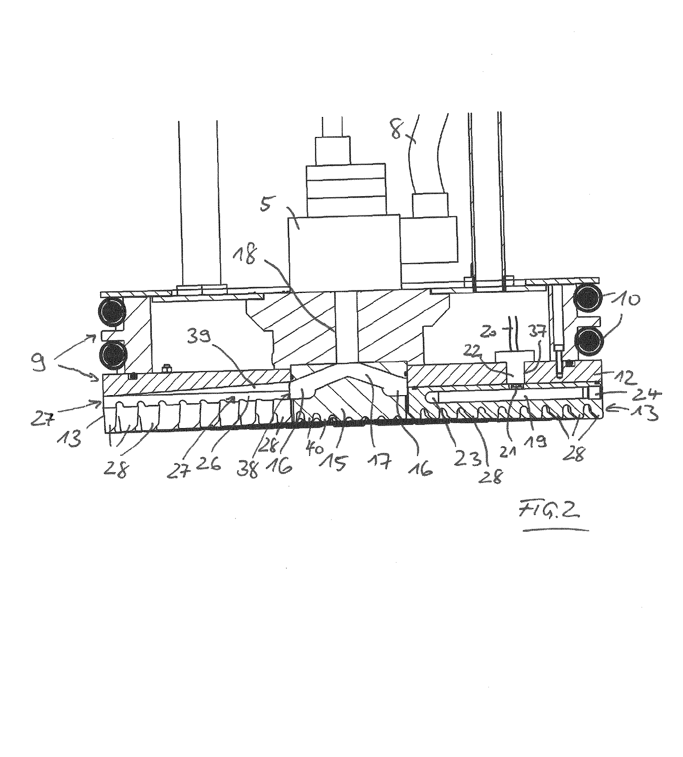

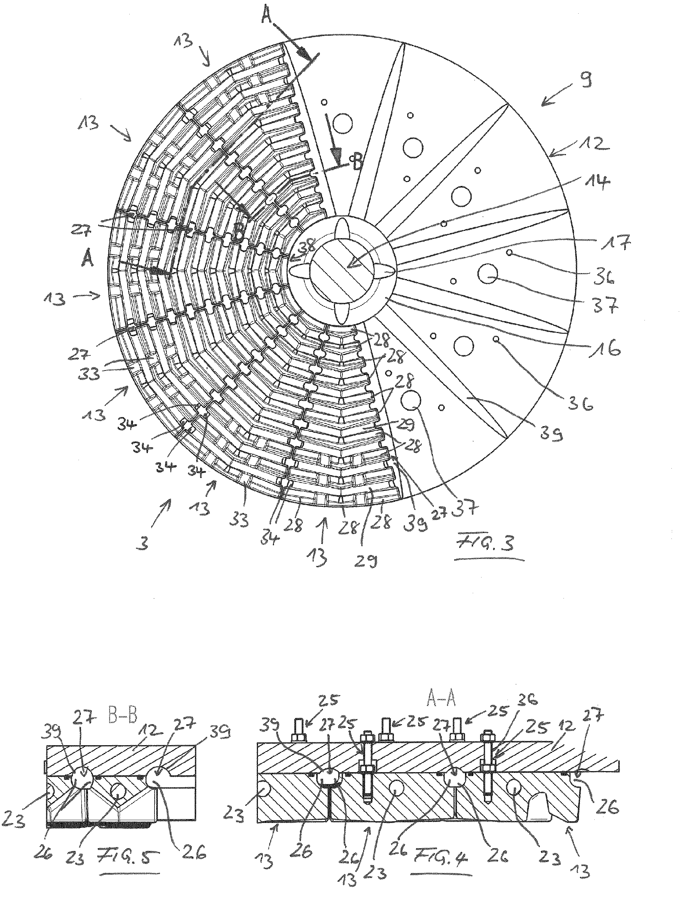

Fig. 2 zeigt einen Querschnitt durch die Folgerplatte 3. An einem Grundkörper 9 der Folgerplatte 3 sind radial außen zwei als Dichtungsringe ausgebildete Dichtungen 10 angebracht, die verhindern, dass flüssiger Klebstoff zwischen der Folgerplatte 3 und einer Fasswand 11 des rotationssymmetrisch gestalteten Fasses 2 austritt, wenn der Klebstoff flüssig ist und die Folgerplatte 3 gegen den Klebstoff im Fass 2 gepresst wird. An ein unteres kreisringförmiges Plattenteil 12 des Grundkörpers 9, wobei das Plattenteil 12 einen relativ großen äußeren Durchmesser und relativ kleinen inneren Durchmesser des Grundkörpers 9 aufweist, sind beheizbare, austauschbare Segmente 13 angeschraubt. Wie ergänzend der Darstellung der Fig. 3 zu entnehmen ist, besteht die Möglichkeit, zwölf Segmente 13 an dem Grundkörper 9 zu befestigen. In dieser Figur sind nur sechs identische Segmente 13 veranschaulicht, die aneinanderliegend angeordnet sind, und das Plattenteil 12 des Grundkörpers 9 über einen Halbkreis des Plattenteils 12 abdecken. Diese Darstellung wurde nur deshalb gewählt, um die Ausbildung des Plattenteils 12 auf dessen Unterseite zu veranschaulichen. Im Betrieb des Fassschmelzers 1 sind zwölf Segmente 13 am Grundkörper 9 befestigt.

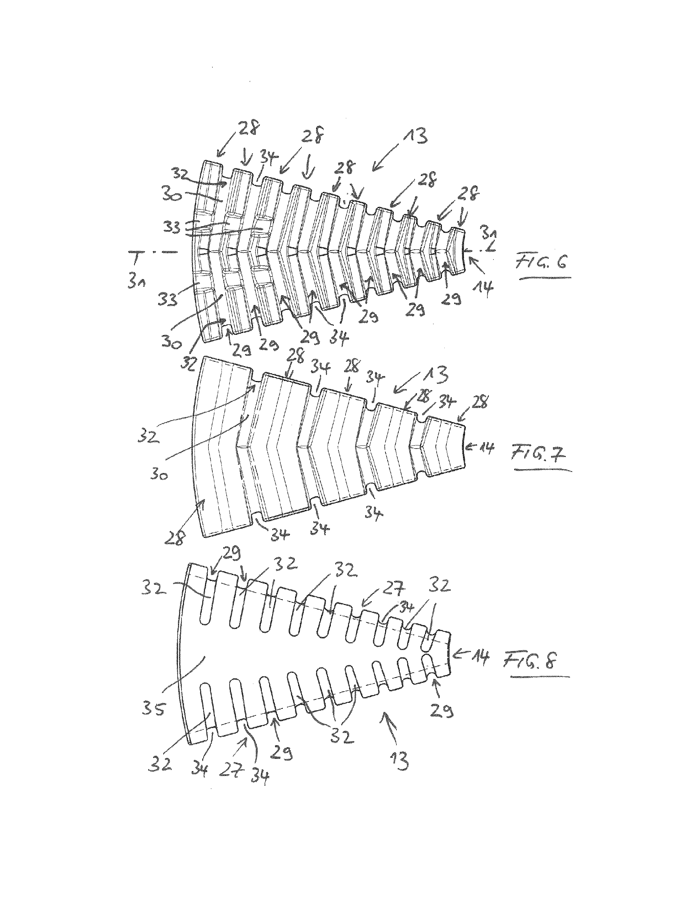

Das jeweils verwendete Segment 13, das für dieses Ausführungsbeispiel in der Fig. 6 im Detail dargestellt ist, ist identisch. Es werden somit zwölf identische Segmente 13 mit dem Grundkörper 9 verbunden. Im Zentrum der Folgerplatte 3, im Bereich eines zentralen Auslasses 38 der Folgerplatte 3, ist ein Einsatz 15 angebracht, der mit einem nach radial außen offenen Rundkanal 16 und mit dem Rundkanal 16 verbundenen Bohrungen 17 versehen ist. Durch den Rundkanal 16 und die Bohrungen 17 kann flüssiger Klebstoff in ein Rohr 18 gelangen. Im Rohr 18 befindlicher Klebstoff kann dann durch die Pumpe 5 angesogen und gefördert werden. Auf der dem aufzuschmelzenden Klebstoff zugewandten Seite ist der Einsatz 15 mit konzentrisch angeordneten Rippensegmenten 40 versehen.

Die Segmente 13 sind mit Heizpatronen 19 bestückt und werden über Kabel 20, die zum Steuerschrank 7 führen, mit Energie versorgt. Damit die Segmente 13 einfach ausgetauscht werden können, sind an den Heizpatronen 19 Stecker 21 angebracht, die in Steckerbuchsen 22, die fest am Plattenteil 12 des Grundkörpers 9 befestigt sind, eingeführt sind. Löcher 37 im Plattenteil 12 dienen der Aufnahme der Steckerbuchsen 22. Bohrungen 23, in denen die Heizpatronen 19 sitzen, sind mit Stopfen 24 verschlossen, damit kein Klebstoff in die Heizpatronen 19 gelangen kann.

Mit der Bezugsziffer 36 sind Löcher im Plattenteil 12 bezeichnet, die der Aufnahme der Schraubverbindungen 25 dienen. Mit der Bezugsziffer 37 sind Löcher in den Plattenteilen 12 bezeichnet, die der Aufnahme der Steckerbuchsen 22 dienen.

Segmente 13 sind an der Seite, mit der sie an das Plattenteil 12 des Grundkörpers 9 mittels Schraubverbindungen 25 angeschraubt werden, mit einem Rücksprung 26 versehen. Die Schraubverbindungen 25 durchsetzen Löcher 36 im Plattenteil 12. Aufgrund der Ausbildung dieser Rücksprünge 26 bilden somit zwei jeweils angrenzende Segmente einen Kanal 27. Dieser erstreckt sich radial innen bis zum Rundkanal 16 des Einsatzes 15. Radial außen erstreckt sich der jeweilige Kanal 27 bis zum radial äußeren Ende des jeweiligen Segments 13, das in geringem Abstand zur Fasswand 11 angeordnet ist. Eine Vergrößerung des Querschnitts des Kanals 27 lässt sich durch zusätzliche Wölbung 39 im Plattenteil 12 erzielen. Die Wölbung 39 im Plattenteil 12 bildet zusammen mit den jeweils zugeordneten beiden Rücksprüngen 26 angrenzender Segmente 13 den jeweiligen Kanal 27, der sich von radial außen bis zum Zentrum 14 erstreckt. Der Querschnitt der jeweiligen Wölbung 39 erweitert sich zum Zentrum 14 hin.

Es sind somit zwischen den zwölf Segmenten 13 zwölf Kanäle 27 angeordnet, die strahlenförmig zum Zentrum 14 der Folgerplatte 3 angeordnet sind.

Die Segmente 13 sind auf der dem Grundkörper 9 abgewandten Seite mit Rippen 28 versehen. Der Darstellung des einzelnen Segments 13 in Fig. 6 ist zu entnehmen, dass das jeweilige Segment zehn Rippen 28 aufweist. Die Rippen 28 sind um das Zentrum 14 herum angeordnet, zum Ableiten von mittels der Segmente 13 aufgeschmolzenem Klebstoff von den Räumen 29 zwischen den Rippen 28 zu den Kanälen 27. Die jeweiligen Rippen 28 sind V-förmig ausgebildet und gegen das Zentrum 14 geneigt angeordnet. Die Grundfläche 30 zwischen jeweils zwei Rippen 28 des jeweiligen Segments 13 ist in einer Segmentmittelachse 31 am weitesten von einer Auflagefläche dieses Segments 13 auf dem Grundkörper 9, somit dem Plattenteil 12, entfernt und es ist diese Grundfläche 30 im Auslaufbereich 32 dieser Rippen 28 am nächsten zur Auflagefläche dieses Segments 13 auf dem Grundkörper 9 ausgeführt. Die Rippen 28 weisen einen sich zur Grundfläche 30 hin erweiternden Querschnitt auf. Die jeweilige Rippe 28 ist einmal geknickt ausgebildet, wobei der Knickbereich sich im Bereich der Segmentmittelachse 31 befindet. Die drei radial äußeren Rippen 28 des jeweiligen Segments 13 sind im Bereich deren jeweiligen auf den Klebstoff im Fass 2 gerichteten Bereich mit zwei Durchlässen 33 für Klebstoff versehen.

Der Darstellung der Fig. 2 bis 5 ist zu entnehmen, dass benachbarte Segmente 13 derart angeordnet sind, dass sich jeweils Rippen 28 unterschiedlicher Segmente 13 kontaktieren. Hierbei mündet der jeweilige Raum 29 zwischen zwei Rippen 28, in Abstand zu den einander abgewandten Enden des Raums 29, durch Durchlässe 34 in einem Boden des Segments 13 in die beiden dem Segment 13 zugeordneten Kanäle 27. Der Querschnitt des jeweiligen Kanals 27 vergrößert sich von seinem radial äußeren Bereich in Richtung des Zentrums 14 bis zu diesem. Wird die mittels der Heizpatrone 19 erhitzte Folgerplatte 3, konkret die erhitzten Segmente 13, auf den zu verflüssigenden Klebstoff gepresst, führt dies zum Verflüssigen des Klebstoffs durch die Wärmezufuhr bei gleichzeitigem Druck auf den Klebstoff über die V-förmigen Rippen 28. Verflüssigter Klebstoff gelangt in den Raum 29 zwischen den Rippen 28 und wird in Längsrichtung der Räume 29 durch die Durchlässe 34 den Kanälen 27 zugeführt. Durch die Kanäle 27 wird der flüssige Klebstoff dem Zentrum 14 zugeleitet, zum Einsatz 15, und dort abgepumpt. Im radial äußeren Bereich der Anordnung der Segmente 13 verflüssigter Klebstoff kann zusätzlich durch die Durchlässe 33 zu benachbarten Räumen 29 zwischen Rippen 28 abgeleitet werden und gelangt von dort zu den Kanälen 27.

Die Fig. 7 und 8 zeigen alternative Ausführungsbeispiele des beschriebenen Segments 13, wobei Bestandteile, die dem Ausführungsbeispiel nach Fig. 6 entsprechen, mit denselben Bezugsziffern bezeichnet sind. Im Übrigen wird auf die grundsätzliche Beschreibung gemäß der Fig. 1 bis 5 Bezug genommen.

Beim Ausführungsbeispiel nach der Fig. 7 weist das jeweilige Segment 13 nur fünf relativ breite Rippen 28 und vier zwischen diesen befindliche Räume 29 auf. Die jeweilige Rippe 28 ist einmal geknickt ausgebildet. Die jeweilige Rippe weist eine deutlich größere Breite, bezogen auf die Radialerstreckung des Segments 13 auf, als die Rippe 28 gemäß dem Segment 13, das in der Fig. 6 veranschaulicht ist. Die Höhe der Rippe 28 gemäß Ausführungsbeispiel nach Fig. 7 entspricht im Wesentlichen der Höhe der Rippe 28 gemäß dem Ausführungsbeispiel nach der Fig. 6, sodass die jeweilige Rippe 28 gemäß Fig. 7 relativ flach gestaltet ist. Die jeweiligen Rippen 28 gemäß Fig. 7 weisen im Wesentlichen dieselbe Breite auf.

Das Ausführungsbeispiel gemäß Fig. 8 unterscheidet sich grundsätzlich von denjenigen nach den Fig. 6 und 7 dadurch, dass es keine Rippen aufweist, sondern eine grundsächlich glatte Oberfläche 35 besitzt. In die beiden das Segment 13 dieser Ausführungsform seitlich begrenzenden Kanäle 27 münden, ausgehend von der Oberfläche 35, rinnenartige Auslaufbereiche 32 des Segments 13 in die Kanäle 27.

### Bezugszeichenliste

- 1: Fassschmelzer
- 2: Fass
- 3: Folgerplatte
- 4: Pneumatikzylinder
- 5: Pumpe
- 6: Motor
- 7: Steuerschrank
- 8: Schlauch
- 9: Grundkörper
- 10: Dichtung
- 11: Fasswand
- 12: Plattenteil
- 13: Segment
- 14: Zentrum
- 15: Einsatz
- 16: Rundkanal
- 17: Bohrung
- 18: Rohr
- 19: Heizpatrone
- 20: Kabel
- 21: Stecker
- 22: Steckerbuchse
- 23: Bohrung
- 24: Stopfen
- 25: Schraubverbindung
- 26: Rücksprung
- 27: Kanal
- 28: Rippe
- 29: Raum
- 30: Grundfläche
- 31: Segmentmittelachse
- 32: Auslaufbereich
- 33: Durchlass
- 34: Durchlass
- 35: Oberfläche
- 36: Loch
- 37: Loch
- 38: Auslass
- 39: Wölbung
- 40: Rippensegment

## Patentansprüche

1. Beheizbare Folgerplatte (3) zum Aufschmelzen von Klebstoff, insbesondere zur Verwendung bei einem Fassschmelzer (1), wobei die Folgerplatte (3) einen Grundkörper (9) und mehrere mit diesem austauschbar verbundene, beheizbare Segmente (13) aufweist, wobei zwischen den Segmenten (13) Kanäle (27) gebildet sind, die strahlenförmig zu einem Zentrum (14) der Folgerplatte (3) angeordnet sind, zum Aufnehmen von mittels der Segmente (13) aufgeschmolzenem Klebstoff in den Kanälen (27) und Ableiten des aufgeschmolzenen Klebstoffs durch die Kanäle (27) in Richtung des Zentrums (14) zu einem zentralen Auslass (38) der Folgerplatte (3).

2. Beheizbare Folgerplatte nach Anspruch 1, wobei in die Segmente (13) Heizpatronen (19) integriert sind.

3. Beheizbare Folgerplatte nach Anspruch 2, wobei die Heizpatronen (19) über eine trennbare Verbindung, insbesondere eine steckbare Verbindung (21, 22), mit einer Energiezuführung verbindbar sind.

4. Beheizbare Folgerplatte nach Anspruch 2 oder 3, wobei die Heizleistung der Heizpatronen (19) über eine Steuerung (7), die die Energiezufuhr steuert, regelbar ist.

5. Beheizbare Folgerplatte nach einem der Ansprüche 1 bis 4, wobei die Folgerplatte (3) in einem zentralen Bereich (14) einen Einsatz (15) mit Durchlässen (16, 17) aufnimmt, wobei die Kanäle (27) mit den Durchlässen (16, 17) in Strömungsverbindung sind und mit dem Einsatz (15) eine Pumpvorrichtung (5) zum Abfördern des geschmolzenen Klebestoffs aus dem Einsatz (15), durch die Durchlässe (16, 17) hindurch, verbindbar ist.

6. Beheizbare Folgerplatte nach einem der Ansprüche 1 bis 5, wobei die mit dem Grundkörper (9) verbundenen Segmente (13) identisch ausgebildet sind.

7. Beheizbare Folgerplatte nach einem der Ansprüche 1 bis 6, **dadurch gekennzeichnet, dass** acht bis sechzehn, vorzugsweise zehn bis vierzehn, insbesondere zwölf Segmente (13) mit dem Grundkörper (9) verbunden sind.

8. Beheizbare Folgerplatte nach einem der Ansprüche 1 bis 7, wobei der Querschnitt des jeweiligen Kanals (27) sich in Richtung des Zentrums (14) vergrößert.

9. Beheizbare Folgerplatte nach einem der Ansprüche 1 bis 8, wobei die Segmente (13) auf der dem Grundkörper (9) abgewandten Seite mit Rippen (28) versehen sind.

10. Beheizbare Folgerplatte nach Anspruch 9, wobei die Rippen (28) um das Zentrum (14) herum angeordnet sind, zum Ableiten von mittels der Segmente (13) aufgeschmolzenen Klebstoff von Räumen (29) zwischen den Rippen (28) zu den Kanälen (27).

11. Beheizbare Folgerplatte nach Anspruch 9 oder 10, wobei der jeweilige Raum (29) zwischen Rippen (28), bezogen auf eine Längserstreckung des Raums (29), gerade oder geknickt, insbesondere einmal geknickt ausgebildet ist.

12. Beheizbare Folgerplatte nach einem der Ansprüche 9 bis 11, wobei die Rippen (28) gegen das Zentrum (14) geneigt angeordnet sind, insbesondere die Rippen (28) V-förmig ausgebildet gegen das Zentrum (14) geneigt angeordnet sind.

13. Beheizbare Folgerplatte nach einem der Ansprüche 9 bis 12, wobei eine Grundfläche (30) zwischen den Rippen (28) des jeweiligen Segments (13) in einer Segmentmittelachse (31) am weitesten von einer Auflagefläche dieses Segments (13) auf dem Grundkörper (9) entfernt ist und diese Grundfläche (30) im Auslaufbereich (32) dieser Rippen (28) am nächsten zur Auflagefläche des Segments (13) auf dem Grundkörper (9) ausgeführt ist.

14. Beheizbare Folgerplatte nach einem der Ansprüche 9 bis 13, wobei benachbarte Segmente (13) derart angeordnet sind, dass sich Rippen (28) unterschiedlicher Segmente (13) kontaktieren oder diese Rippen (28) in Abstand zueinander angeordnet sind.

15. Beheizbare Folgerplatte nach Anspruch 14, wobei der jeweilige Raum (29) zwischen zwei Rippen (28), in Abstand zu den einander abgewandten Enden dieses Raums (29), durch Durchlässe (34) in einem Boden des Segments (13) in die dem Segment (13) zugeordneten Kanäle (27) mündet.
